Europäisches Patentamt

(19) **European Patent Office**

**Office européen des brevets**

(11) Numéro de publication: **0 135 417**

**A1**

(12) # DEMANDE DE BREVET EUROPEEN

(21) Numéro de dépôt: **84401532.1**

(22) Date de dépôt: **19.07.84**

(51) Int. Cl.⁴: **B 27 B 5/22**
**B 27 B 25/04, B 27 B 31/08**

(30) Priorité: **04.08.83 FR 8313019**

(43) Date de publication de la demande:
**27.03.85 Bulletin 85/13**

(84) Etats contractants désignés:
**BE DE GB IT NL**

(71) Demandeur: **LA NACELLE (S.A.R.L.)**
**Quartier du Terradou**
**F-84200 Carpentras(FR)**

(72) Inventeur: **Girard, Claude**
**Route d'Avignon**
**F-13440 Cabannes(FR)**

(72) Inventeur: **Derosier, Francis**
**27 rue Eucher Ferrier**
**F-13440 Cabannes(FR)**

(74) Mandataire: **Bugnon-Hays, Claudine**
**PATCO S.A. 45, Boulevard Albin Durand**
**F-84200 Carpentras(FR)**

(54) **Dispositif pour découper des éléments allongés à section rectangulaire en tronçons d'une longueur prédéterminée.**

(57) La présente invention concerne le découpage d'éléments allongés à section rectangulaire.

Elle concerne en particulier un dispositif pour découper des carrés de bois pour la fabrication des cageots de fruits et légumes caractérisé en ce qu'il comprend une première bande de transport horizontale (1) munie de taquets d'entraînement (4) pour les baguettes (6) à débiter, une butée (11) supérieure pour les baguettes (6) chargée sur le brin supérieur de la première bande (1), une scie circulaire (12) dont la lame (13) est disposée entre le guide (11) et la bande (1), un bac de guidage (7) entourant la partie inférieure de la première bande (1) et qui présente une partie ajourée (14) au-dessous de laquelle est disposée une deuxième bande de transport (15) s'étendant transversalement par rapport à ladite première bande (1) et qui est entraînée en direction du guide (11) pour amener les baguettes (6) en butée contre un guide inférieur (17), une deuxième scie circulaire inférieure (18) disposée à une distance prédéterminée du guide (17) et en aval de la deuxième bande (15) et un dispositif (20) pour l'extraction des tronçons (19) découpés par le deuxième scie (18).

Fig.1

**0135417**

DISPOSITIF POUR DECOUPER DES ELEMENTS ALLONGES A SECTION RECTANGULAIRE EN

TRONCONS D'UNE LONGUEUR PREDETERMINEE

La présente invention concerne un dispositif pour découper des baguettes à section rectangulaire en tronçons d'une longueur prédéterminée notamment pour débiter les carrés de bois pour la fabrication des cageots pour fruits et légumes.

Pour débiter les carrés de bois à partir de baguettes de longueurs différentes, on utilise habituellement une scie circulaire avec une butée réglable. Ce travail est encore très souvent effectué à la main et donc très coûteux et il ne permet pas de suivre les cadences des machines d'assemblage auxquelles sont destinés les tronçons découpés.

On connait également des dispositifs semi-automatiques comprenant une scie circulaire horizontale et dans lesquels les baguettes à découper sont guidées vers la scie à travers un tambour vertical rotatif comprenant une série de conduits de guidage. Au-dessous de ce tambour est disposée une came réglable déterminant la longueur des tronçons à découper. La vitesse de travail de ces dispositifs est relativement lente et la mise en place des baguettes dans le tambour est un travail relativement délicat. De plus, le premier tronçon découpé à partir de chaque baguette est perdu parce que les baguettes ne sont normalement pas équerrées à leurs extrémités.

La présente invention a pour objet de concevoir un dispositif semi-automatique travaillant à des vitesses élevées, facile à alimenter et qui permet de réduire considérablement les pertes dûes à la première coupe sur chaque baguette.

Le dispositif selon la présente invention est caractérisé en ce qu'il comprend une première bande de transport sans fin horizontale munie de taquets d'entrainement espacés régulièrement sur toute la longueur de la bande et délimitant une série de logements destinés à recevoir les baguettes à débiter, un guide supérieur disposé au voisinage de l'un des bords latéraux de ladite bande, une scie circulaire supérieure dont la lame s'étend entre ledit guide supérieur et le bord latéral correspondant de la bande, un bac de guidage inférieur constitué d'une table de guidage inférieure disposée en regard du brin inférieur de la bande et de deux parois verticales, extrêmes, courbes s'étendant sensiblement jusqu'au niveau du brin supérieur de la bande, une deuxième bande de transport inférieure s'étendant dans le sens transversal de ladite première bande au-dessous de ladite table de guidage et en regard d'une partie ajourée

- 2 -

de celle-ci, la deuxième bande étant entraînée en direction du brin supérieur, un guide inférieur parallèle audit guide supérieur et disposé à une distance prédéterminée de celui-ci, au-dessous du brin inférieur de la première bande, une scie circulaire inférieure disposée en aval de la deuxième bande à une distance prédéterminée réglable dudit guide inférieur et un dispositif d'extraction des tronçons découpés par la scie inférieure disposé en aval de cette dernière au niveau de l'extrémité correspondante de ladite première bande.

Les baguettes à découper sont disposées à la main dans les logements ménagés entre les taquets d'entraînement de la première bande. Ce travail est facile et rapide. Les baguettes en butée contre le guide supérieur sont amenées à la scie supérieure qui assure un équerrage des extrémités avant des baguettes. La partie ainsi découpée peut être d'une longueur très réduire.

Les baguettes sont ensuite amenées sur la table de guidage inférieure et sur la deuxième bande de transport. Celle-ci les amène par leurs extrémités équerrées contre le guide inférieur. La scie inférieure effectue ensuite le découpage des tronçons d'une longueur déterminée par l'écartement entre le guide inférieur et la lame de la scie inférieure. Enfin les tronçons découpés sont amenés sur la table de guidage inférieure vers le dispositif d'extraction. Les baguettes restant sur la première bande passent sur le brin supérieur de celle-ci sans nouvelle coupe d'équerrage. La deuxième bande les positionne ensuite correctement contre le guide inférieur avant le découpage d'un autre tronçon.

Pour maintenir les baguettes appliquées contre la table de guidage inférieure pendant le découpage des tronçons, le dispositif selon l'invention comprend une chaîne sans fin disposée à l'intérieur de ladite première bande et entraînée en synchronisation avec celle-ci, les maillons de cette chaîne portant des taquets pivotants fixés par leurs bras aux maillons et dont les têtes de bras tendent à les faire pivoter vers le bas lorsqu'ils sont amenés au niveau du brin inférieur de la première bande. Cette dernière comportant en regard de ces taquets des parties ajourées permettant aux taquets d'être appliqués sur les baguettes pendant leur passage devant la scie inférieure.

De préférence, le dispositif selon l'invention comprend dans ce dernier cas un guide horizontal disposé au-dessus du brin inférieur de la première bande et qui est soumis à des moyens élastiques tendant à l'amener dans une position inférieure dans laquelle il coopère avec les têtes desdits taquets.

Suivant un autre mode de réalisation, le dispositif d'extraction comprend deux guides fixes s'étendant par une extrémité courbe au-dessus de l'extrémité avant de la première bande et une fourche montée pivotant entre une position inférieure et une position supérieure pour l'extraction des tronçons découpés.

D'autres réalisations et avantages de l'invention ressortiront de la description qui va suivre et en se référant aux dessins annexés sur lesquels :

la figure 1 est une vue en perspective schématique d'un mode de réalisation préféré du dispositif selon l'invention avec des arrachements permettant de montrer le tapis et la scie situés sur la face inférieure du tapis transporteur principal,

la figure 2 est une vue en coupe transversale schématique du dispositif représenté à la figure 1 suivant une ligne disposée entre la scie supérieure et la scie inférieure,

la figure 3 est une vue en coupe transversale schématique montrant la chaîne portant les taquets de serrage selon l'invention,

la figure 4 est une vue en perspective schématique montrant un maillon portant un taquet tel que représenté à la figure 3 et

la figure 5 est une vue en perspective montrant le mécanisme d'éjection des carrés de bois découpés du dispositif selon l'invention.

Le dispositif selon l'invention représenté aux dessins annexés comprend essentiellement une bande de transport sans fin horizontale 1 entraînée par un moteur principal non représenté autour de deux rouleaux 2 et 3. La bande de transport 1 porte sur sa face extérieure une série de taquets d'entraînement 4 constitués par des profilés carrés s'étendant sur toute la largeur de la bande. Les taquets 4 sont espacés régulièrement entre eux sur toute la longueur de la bande 1 et délimitent ainsi une série de logements 5 destinés à recevoir les carrés de bois à découper 6.

La bande sans fin 1 avec les rouleaux 2 et 3 est disposée dans un bac de guidage inférieur 7 comprenant une table de guidage inférieure 8 s'étendant au-dessous d'un brin inférieur de la bande 1 et qui est prolongée à ses deux extrémités par des guides carrés 9, 10 suivant la courbure des rouleaux 2, 3 et s'étendant sensiblement jusqu'au niveau du brin supérieur de la bande 1.

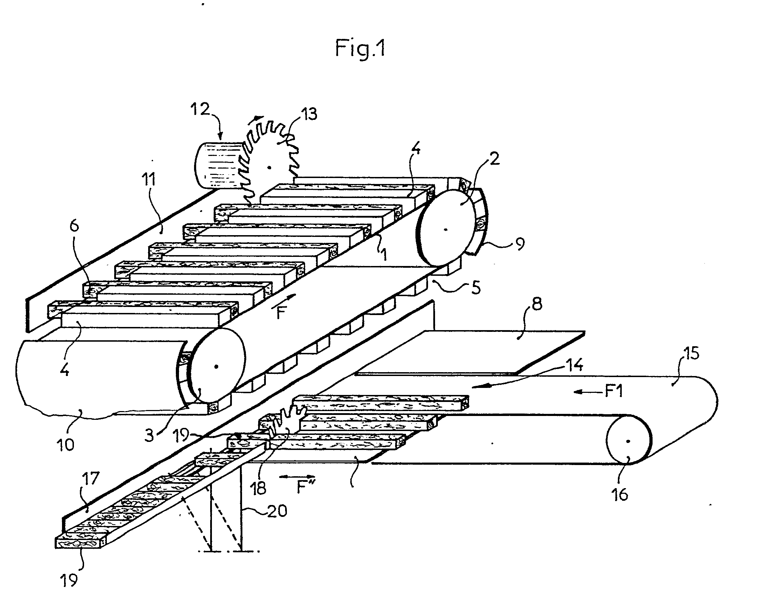

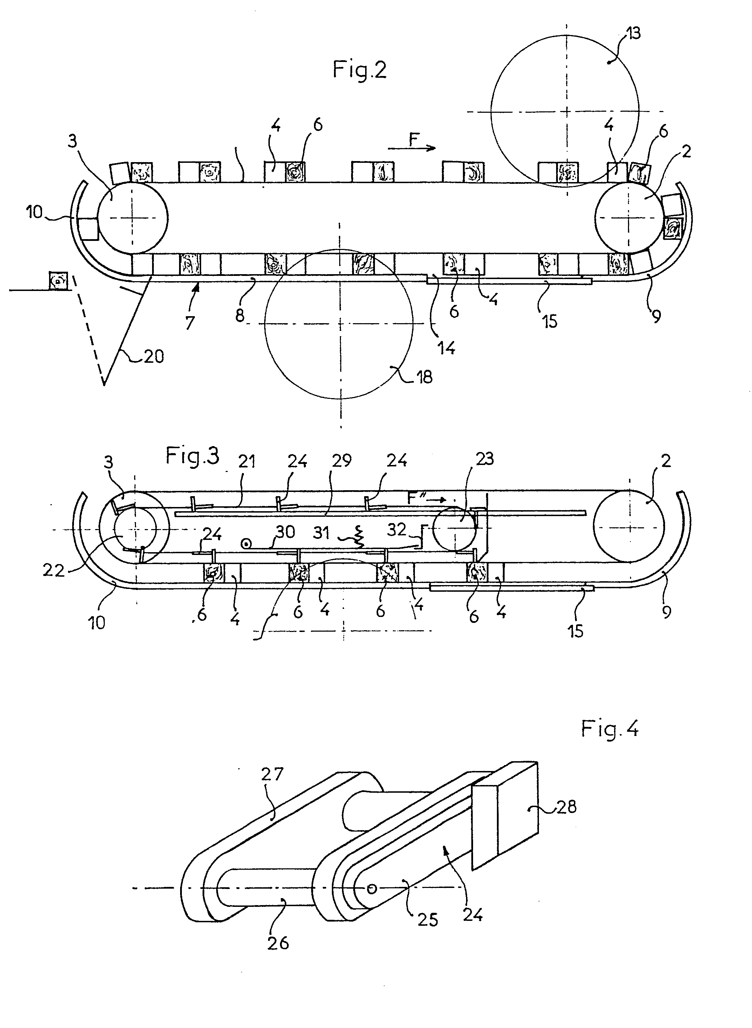

Au voisinage de l'une des extrémités latérales de la bande 1 est disposé en regard du brin supérieur de celle-ci un guide 11 s'étendant sur toute la longueur du brin supérieur. La bande 1 est entraînée dans le sens de la flèche F (figures 1 et 2). Au voisinage de l'extrémité amont du brin supérieur de la bande 1 est prévue une première scie circulaire 12 dont la lame de scie 13 s'étend dans l'espace ménagé entre le bord latéral du brin supérieur de la bande 1 et le guide latéral 11.

La table de guidage inférieure 8 présente une partie ajourée 14 s'étendant sensiblement sur toute sa largeur. Au-dessous de la table 8 est disposée en regard de la partie ajourée 14 une deuxième bande de transport 15 entraînée par un rouleau 16 dans le sens de la flèche F'. La bande 15 s'étend dans le sens transversal de la première bande 1 et est avancée en direction du guide 11. A une distance prédéterminée réglable de ce guide 11 est prévu à l'extrémité latérale de la table de guidage inférieure 8 un guide inférieur 17 s'étendant sur toute la longueur de la bande 1 et d'un dispositif d'extraction décrit plus loin.

En aval de la partie ajourée 14 de la table inférieure 8 est prévue une deuxième scie circulaire dont la lame 18 s'étend à travers une ouverture prévue dans la table 8. Cette scie est montée mobile dans le sens de la flèche F" pour pouvoir ajuster son écartement par rapport au guide inférieur 17.

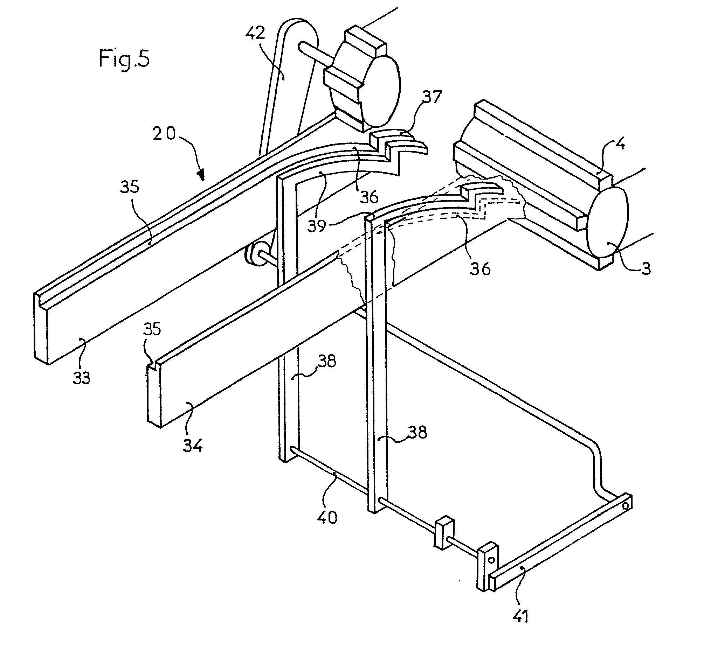

Enfin en aval de la scie circulaire inférieure est prévu au niveau du rouleau 3 un dispositif d'extraction 20 des carrés découpés tel que représenté plus en détail à la figure 5.

Pour maintenir les carrés de bois 6 au niveau de la scie inférieure correctement sur la table de guidage inférieure 8, il est prévu, à l'intérieur du tapis 1, entre le guide inférieur 17 et la scie inférieure, une chaîne sans fin 21 représentée schématiquement à la figure 3. Cette chaîne 21 est guidée sur un galet 22 calé sur l'arbre du rouleau 3 et sur un galet 23 disposé en amont de la scie inférieure. Elle est entraînée dans le sens de la flèche F''', en synchronisation avec la bande sans fin 1. Un certain nombre des maillons de cette chaîne 21 comprend des taquets 24 tels que représentés aux figures 3 et 4. Comme représenté schématiquement à la figure 4, ces taquets 24 comprennent un bras 25 articulé par l'une de ces extrémités libres sur l'axe 26 d'un maillon 27 de la chaîne 21. A l'autre extrémité du bras 25, est prévue une tête 28. Lorsque les taquets 24 sont amenés sur le brin supérieur de la chaîne 21, ils sont amenés sous l'action de la gravité en alignement avec la chaîne et ils sont alors maintenus dans cette position par un guide horizontal 29. Lorsque les taquets 24 sont amenés sur le brin inférieur de la chaîne 21 les têtes 28 pivotent vers le bas (figure 3) et sont amenées en contact avec les carrés de bois 6 à travers des ouvertures prévues dans la table inférieure 8. A ce moment, ils sont poussés vers le bas par un guide pivotant horizontal 30 soumis à l'action d'un ressort 31 tendant à l'amener dans une position inférieure. Le guide 30 libère les taquets 24 à un niveau situé en aval de la scie inférieure 18. De plus, le guide 30 coopère avec un limitateur de course 32 contrôlant la pression exercée par les taquets sur les carrés de bois 6.

La figure 5 montre plus en détail le dispositif d'extraction 20 des carrés de bois découpés 19. Ce dispositif est constitué de deux guides horizontaux fixés 33, 34 dont l'écartement est réglable en fonction de l'écartement entre le guide inférieur 17 et la lame de scie 18.

Ces guides comprennent une partie arrière horizontale 35 et une partie avant courbe inclinée vers le bas 36 rejoignant une butée verticale 37. Les parties 36 et 37 s'étendent au-dessous du rouleau 3 et au-dessous du niveau de la table 8. A l'intérieur des guides fixes 33, 34 est prévue une fourche mobile dont chaque branche comporte un bras vertical 38 et une partie supérieure horizontale 39 de la même configuration que les parties 36, 37 des guides fixes. La fourche 38, 39 est montée sur une tige 40 dont le pivotement est commandé par l'intermédiaire d'une bielle 41 et une transmission à chaîne 41 en synchronisation avec l'entraînement du rouleau 3 et ainsi de la bande sans fin 1 assurant le transport des carrés de bois 4 et 19.

Bien entendu, l'invention n'est pas limitée aux modes de réalisation décrits et représentés ici mais on peut y apporter de nombreuses modifications sans pour cela sortir du cadre de l'invention.

REVENDICATIONS

1) Dispositif pour découper des baguettes à section rectangulaire en tronçons d'une longueur prédéterminée notamment pour débiter les currés de bois pour la fabrication des cageots pour fruits et légumes caractérisé en ce qu'il comprend une première bande de transport sans fin horizontale (1) munie de taquets d'entrainement (4) espacés régulièrement sur toute la longueur de la bande (1) et délimitant une série de logements (5) destinés à recevoir les baguettes à débiter (6), un guide supérieur (11) disposé au voisinage de l'un des bords latéraux de ladite bande (1), une scie circulaire supérieure (12) dont la lame s'étend entre ledit guide supérieur (11) et le bord latéral correspondant de la bande (1), un bac de guidage inférieur (7) constitué d'une table de guidage inférieure (8) disposé en regard du brin inférieur de la bande (1) et de deux parois verticales, extrêmes, courbes (9, 10) s'étendant sensiblement jusqu'au niveau du brin supérieur de la bande (1), une deuxième bande de transport inférieure (15) s'étendant dans le sens transversal de ladite première bande (1) au-dessous de ladite table de guidage (8) et en regard d'une partie ajourée (14) de celle-ci, la deuxième bande (15) étant entraînée en direction dudit guide supérieur (11), un guide inférieur (17) parallèle audit guide supérieur (11) et disposé à une distance prédéterminée de celui-ci au-dessous du brin inférieur de la première bande (1), une scie circulaire inférieure (18) disposée en aval de la deuxième bande (15) à une distance prédéterminée réglable dudit guide inférieur (17) et un dispositif d'extraction (20) des tronçons découpés (19) par la scie inférieure (18) disposé en aval de cette dernière au niveau de l'extrémité correspondante de ladite première bande (1).

2) Dispositif suivant la revendication 1, caractérisé en ce qu'il comprend une chaîne sans fin (21) disposée à l'intérieur de ladite première bande (1) et entraînée en synchronisation avec celle-ci, les maillons (27) de cette chaîne (21) portant des taquets pivotants (24) fixés par leurs bras (25) aux maillons (27) et dont les têtes de bras (28) tendent à les faire pivoter vers le bas lorsqu'ils sont amenés au niveau du brin inférieur de la première bande (1), cette dernière comportant en regard de ces taquets (24) des parties ajourées permettant aux taquets (24) d'être appliqués sur les baguettes (6) pendant leur passage devant la scie infé-

0135417

rieure (18).

3) Dispositif suivant la revendication 2 caractérisé en ce qu'il comprend un guide horizontal (29) disposé au-dessus du brin inférieur de la première bande (1) et qui est soumis à des moyens élastiques (31) tendant à l'amener dans une position inférieure dans laquelle il coopère avec les têtes (28) desdits taquets (24).

4) Dispositif suivant l'une quelconque des revendications 1 à 3, caractérisé en ce que ledit dispositf d'extraction (20) comprend deux guides fixes (33, 34) alignés l'un sur ledit guide inférieur (17) et l'autre sur la lame de la scie inférieure (18) et qui comprennent une partie courbe (36) s'étendant vers le bas au-dessous de l'extrémité avant de la première bande (1) entre lesdits guides fixes (33, 34) étant prévu une fourche (38, 39) montée pivotant entre une position inférieure dans laquelle ses bras s'étendent au niveau des parties courbes (36) des guides fixes (33, 34) et une position supérieure dans laquelle ses bras s'étendent au niveau des parties horizontales (35) des guides fixes (33, 34).

Fig.1

PL2/3          0135417

Fig.2

Fig.3

Fig.4

Fig.5

## Office européen des brevets

## RAPPORT DE RECHERCHE EUROPEENNE

### DOCUMENTS CONSIDERES COMME PERTINENTS

| Categorie | Citation du document avec indication, en cas de besoin, des parties pertinentes | Revendication concernée | CLASSEMENT DE LA DEMANDE (Int Cl 4) |
|---|---|---|---|
| A | DE-C-  520 410  (EDUARD WOLF & SÖHNE) | 1 | B 27 B    5/22<br>B 27 B   25/04<br>B 27 B   31/08 |
| | --- | | |
| A | FR-A-1 194 216 (SOCOLEST-VALDOIE) | 1 | |
| | --- | | |
| A | FR-A-1 540 353 (SOCOLEST-VALDOIE SOCIETE DE CONSTRUCTIONS MECANIQUES DE L'EST)<br>* page 3, colonne de droite, lignes 13-19; figure 3 * | 1 | |
| | --- | | |
| A | DE-C-  94 089  (NEHEIMER METALLWAAREN- UND WERKZEUGFABRIK HUGO BREMER)<br>* page 1, colonne de gauche, lignes 23-33; figure 2 * | 1 | DOMAINES TECHNIQUES RECHERCHES (Int Cl.4) |
| | --- | | |
| A | CH-A-  357 860  (BAUWERK AG)<br>* page 2, lignes 32-36; figures 3,4,6 * | 1 | B 27 B<br>B 23 D<br>B 27 M |
| | --- | | |
| A | DE-C-  126 891  (BÖTTCHER & GESSNER)<br>* revendication; figures 1,4 * | 1-3 | |
| | --- | | |
| A | DD-A-  37 153  (A. RICHTER et al.) | 2,3 | |
| | ---            -/- | | |

Le présent rapport de recherche a été établi pour toutes les revendications

| Lieu de la recherche | Date d'achèvement de la recherche | Examinateur |
|---|---|---|
| LA HAYE | 08-11-1984 | MOET H.J.K. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503.03.82

**Office européen des brevets**

## RAPPORT DE RECHERCHE EUROPEENNE

EP  84 40 1532

Page  2

### DOCUMENTS CONSIDERES COMME PERTINENTS

| Catégorie | Citation du document avec indication. en cas de besoin. des parties pertinentes | Revendication concernée | CLASSEMENT DE LA DEMANDE (Int. Cl 4) |
|---|---|---|---|
| A | CH-A- 365 866 (BAUWERK AG) <br> * page 3, lignes 2-49; figures 11,12 * | 1,4 | |
| | --- | | |
| A | FR-A-2 460 188 (PALETTES PERURENA) | 1 | |
| | --- | | |
| A | FR-A-2 293 124 (F. CISAR) | 1 | |
| | ----- | | |

DOMAINES TECHNIQUES RECHERCHES (Int. Cl.4)

Le present rapport de recherche a été établi pour toutes les revendications

| Lieu de la recherche | Date d'achèvement de la recherche | Examinateur |
|---|---|---|
| LA HAYE | 08-11-1984 | MOET H.J.K. |